# EUROPÄISCHE PATENTSCHRIFT

(11) **EP 2 024 120 B1**
(45) Veröffentlichungstag und Bekanntmachung des Hinweises auf die Patenterteilung: **26.01.2011**
(21) Anmeldenummer: 07722463.2
(22) Anmeldetag: 24.05.2007
(51) Int. Cl.: B23B 5/12

(54) **VORRICHTUNG ZUR SPANABHEBENDEN BEARBEITUNG STANGEN- ODER ROHRFÖRMIGER WERKSTÜCKE**
DEVICE FOR CUTTING BAR-SHAPED OR TUBULAR WORKPIECES
DISPOSITIF POUR USINER DES PIÈCES EN FORME DE BARRE OU DE TUYAU PAR ENLÈVEMENT DE COPEAUX

(30) Priorität: 31.05.2006 DE 102006025812
(43) Veröffentlichungstag der Anmeldung: 18.02.2009
(73) Patentinhaber: EJP Maschinen GmbH, 52499 Baesweiler (DE)
(72) Erfinder: PARASKEVAS, Elefterios, 52076 Aachen (DE)
(74) Vertreter: Naeven, Ralf
(86) Internationale Anmeldenummer: PCT/DE2007/000945
(87) Internationale Veröffentlichungsnummer: WO 2007/137561

(56) Entgegenhaltungen:
- DE-A1- 2 904 483
- DE-A1- 19 503 772
- US-A- 3 744 358

## Beschreibung

Die Erfindung betrifft eine Vorrichtung zur spanabhebenden Bearbeitung stangen- oder rohrförmiger Werkstücke, umfassend eine mit einem Durchlass für das zu bearbeitende Werkstück versehene und um die Längsachse des zu bearbeitenden Werkstücks drehbar gelagerte und angetriebene Werkzeughalterung mit mehreren im Wesentlichen in radialer Richtung zustellbaren Werkzeugen, eine konzentrisch zur Werkzeughalterung drehbar gelagerte und angetriebene Zustellhülse, Relativbewegungsmittel zur Erzeugung einer Relativbewegung zwischen Werkzeughalterung und Zustellhülse, Zustellmittel zur Umsetzung der Relativbewegung zwischen Werkzeughalterung und Zustellhülse in eine Zustellbewegung der Werkzeuge wobei die Relativbewegung zwischen Werkzeughalterung und Zustellhülse eine zur Drehachse der Werkzeughalterung konzentrische Relativrotation ist.

Eine derartige Vorrichtung ist aus der US 3,744,358 bekannt. Darin wird zwar offenbart, dass es möglich sein soll, geeignete Mittel bereitzustellen, um die Zustellhülse relativ zur Werkzeughalterung zuzustellen, ohne dass die Rotation der Werkzeughalterung gestoppt wird. Ein Beispiel für die Ausführbarkeit dieser Zielsetzung ist jedoch nicht genannt.

Des Weiteren ist eine Maschine zum Schälen von Rohren und Stangen (Dreh-Schälmaschine) aus der DE 195 03 772 C2 bekannt. Vorrichtungen dieser Art sind dafür vorgesehen, die Oberflächen der stangen- oder rohrförmigen Werkstücke an ihrem Umfang zu schälen, um oberflächige Fehler zu entfernen und/oder die Werkstücke auf den oder die gewünschten Durchmesser zu bringen. Hierfür wird das Werkstück in Richtung seiner Längsachse durch die Vorrichtung geführt, wobei mehrere um diese Längsachse rotierende Schälwerkzeuge den Umfang spanabhebend bearbeiten.

Zur Einstellung eines bestimmten Schäldurchmessers, insbesondere aber auch zur Kompensation ihrer Abnutzung sind die Werkzeuge in radialer Richtung zustellbar. Gemäß der DE 195 03 772 C2 ist um die im Wesentlichen scheibenförmige Werkzeughalterung herum eine konusförmige Hülse vorgesehen. Die Werkzeughaltung und die konusförmige Hülse drehen sich mit übereinstimmender Winkelgeschwindigkeit um dieselbe Achse. Die Schälwerkzeuge und der dazugehörige Werkzeugträger liegen dabei mit ihrem Rücken an der Innenfläche der konusförmigen Hülse an. Um nun eine Zustellbewegung für die Werkzeuge zu erreichen, wird die Konushülse in axialer Richtung relativ zum Werkzeughalter verschoben, so dass auf Grund eines sich verringernden Innenradius der Konushülse die Werkzeuge radial in Richtung auf die Drehachse verschoben werden.

Bei der Bearbeitung der maximalen Durchmesser liegen somit die Werkzeuge bzw. Werkzeugträger am vorderen äußeren Rand der Konushülse an, was in Bezug auf die auftretenden großen Kräfte zu Asymmetrien und ungleichmäßigem Lauf der Werkzeuge und damit zu ungewünschten Abweichungen von der Rundheit des bearbeiteten Werkstückes führen kann.

Es ist Aufgabe der vorliegenden Erfindung, eine Vorrichtung der eingangs genannten Art mit einer alternativen Zustellmechanik zur Verfügung zu stellen, die die Zustellung ohne Unterbrechung der für die Bearbeitung vorgesehenen Drehung der Werkzeughalterung auf zuverlässige Weise ermöglicht.

Diese Aufgabe wird bei einer Vorrichtung der eingangs genannten Art durch die kennzeichnenden Merkmale des Anspruchs 1 gelöst.

Eine Relativrotation zwischen Zustellhülse und Werkzeughalterung bedeutet also, dass sich die Rotationsgeschwindigkeiten von Zustellhülse und Werkzeughalterung für die Zustellbewegung kurzzeitig leicht unterscheiden müssen. Die Relativrotation anstelle der axialen Relativbewegung zwischen Werkzeughalterung und Zustellhülse bringt neue, vorteilhafte Möglichkeiten für die Zustellung mit sich. Insbesondere wird vermieden, dass die Werkzeuge bzw. Werkzeugträger für die maximalen Bearbeitungsdurchmesser an den äußeren Rand eines Konus gerührt werden müssen.

Die entgegengesetzte Orientierung der beiden Schrägverzahnungen des Hülsenantriebszahnrads und des Halterungsantriebszahnrads bedeutet, dass das Hülsenantriebszahnrad rechtssteigend und das Werkzeughaltungsantriebszahnrad linkssteigend oder umgekehrt verzahnt ist. Wird nun die Getriebewelle axial relativ zur Zustellhülse und zur Werkzeughalterung während des laufenden Getriebes verschoben, führt dies auf Grund der Schrägverzahnung zu einer geringen Erhöhung bzw. Verringerung der Winkelgeschwindigkeit des Hülsenantriebszahnrads bzw. des Halterungsantriebszahnrads während dieser Verschiebung. Z. B. rotiert das Halterungsantriebszahnrad etwas schneller und das Hülsenantriebszahnrad etwas langsamer, so dass es zwischen Halterungsantriebszahnrad und Hülsenantriebszahnrad zu einer Relativrotationsbewegung kommt. Damit ist die Relativrotation für die Zustellbewegung unmittelbar in den Antrieb für die Werkzeughalterung und die Zustellhülse integriert.

Die erfindungsgemäße Vorrichtung kann auch so ausgebildet sein, dass die Zustellmittel für jedes Werkzeug eine an der Zustellhülse vorgesehene Werkzeugführung umfassen, wobei jede Werkzeugführung mit sich verringerndem Abstand zur Zustellhülsendrehachse in Umfangsrichtung verlaufend angeordnet ist, und jedes Werkzeug unmittelbar oder über einen Werkzeugträger an der zugehörigen Werkzeugführung anliegt.

Bei den Werkzeugführungen kann es sich um z.B. ebene Bahnen handeln, entlang derer die Rücken der Werkzeuge oder Werkzeugträger während der Relativrotation zwischen Zustellhülse und Werkzeughalterung gleiten. Alternativ ist eine Führung über rotierende Elemente, z.B. Wälzlager, denkbar.

Die erfindungsgemäße Vorrichtung kann auch so ausgebildet sein, dass das Halterungsantriebszahnrad oder das Hülsenantriebszahnrad von einem Hauptantriebszahnrad angetrieben ist.

Weiterhin kann die erfindungsgemäße Vorrichtung so ausgebildet sein, dass die Werkzeuge Schneidmesser sind.

Weiterhin kann die erfindungsgemäße Vorrichtung so ausgebildet sein, dass die Werkzeuge Fräsen sind.

Fräsen haben den enormen Vorteil einer deutlich erhöhten Bearbeitungsgeschwindigkeit. Obwohl Fräsen in der Regel zur flächigen Bearbeitung vorgesehen werden, wird beim Ersatz der Schneidmesser durch Fräsen weiterhin eine hinreichende Genauigkeit der Rundheit der bearbeiteten stab- oder rohrförmigen Werkzeuge erreicht, da die Fräsen auf Grund der Form der Werkzeuge sowie der hohen Rotationsgeschwindigkeit im Wesentlichen das Werkstück nur linienförmig bearbeiten.

Die erfindungsgemäße Vorrichtung kann auch so ausgebildet sein, dass die Werkzeuge sowohl einen Satz spanabhebender Werkzeuge als auch einen Satz nicht spanabhebender Werkzeuge umfasst. Die spanabhebenden Werkzeuge können die bereits vorgenannten Fräsen oder Schneidmesser sein.

Dabei kann die erfindungsgemäße Vorrichtung vorteilhaft auch so ausgebildet sein, dass die spanabhebenden Werkzeuge und die nicht spanabhebenden Werkzeuge in Vortriebsrichtung des zu bearbeitenden Materials gesehen derart hintereinander angeordnet sind, dass das zu bearbeitende Material zunächst von den spanabhebenden Werkzeugen und anschließend von den nicht spanabhebenden Werkzeugen bearbeitet wird.

Die nicht spanabhebenden Werkzeuge dienen somit einer Nachbearbeitung.

Insbesondere kann es vorteilhaft sein, die erfindungsgemäße Vorrichtung so auszubilden, dass die nicht spanabhebenden Werkzeuge Polierwerkzeuge, insbesondere solche mit Polierrollen sind.

Schließlich kann die erfindungsgemäße Vorrichtung so ausgebildet sein, dass die nicht spanabhebenden Werkzeuge gleichzeitig als Zentrierung für das zu bearbeitende Material dienen.

Im Folgenden werden beispielhafte Ausbildungsformen der Erfindung anhand von Figuren dargestellt.

Es zeigen schematisch
- Fig. 1:: in perspektivischer Ansicht einen Schälkopf, bei dem eines von vier Schälmessern dargestellt ist,
- Fig. 2:: ein Getriebe zum Antrieb des Schälkopfes,
- Fig. 3:: einen Schälkopf mit Fräsen,
- Fig. 4:: einen weiteren Schälkopf mit Fräsen und Polierrollen und
- Fig. 5:: eine Fräse und eine Polierrolle in einer zu Fig. 4 senkrechten Ansicht.

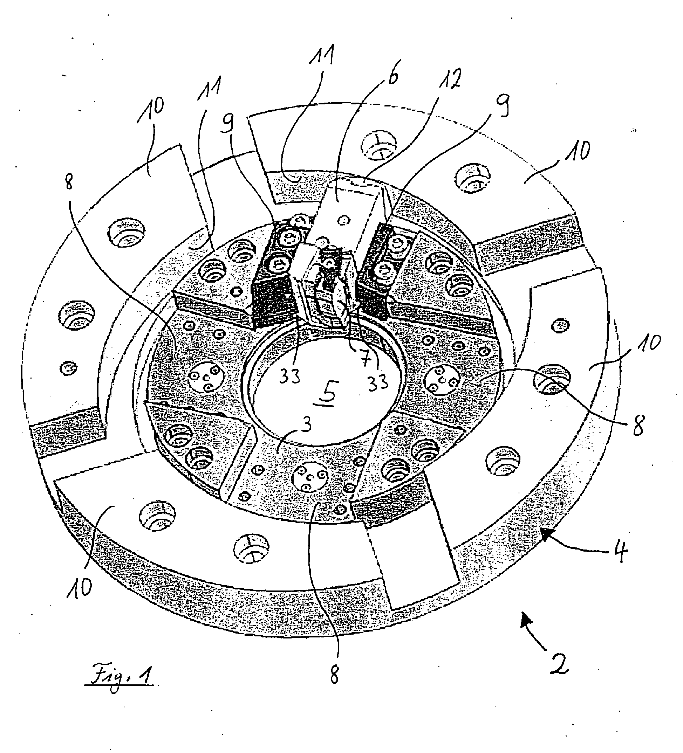

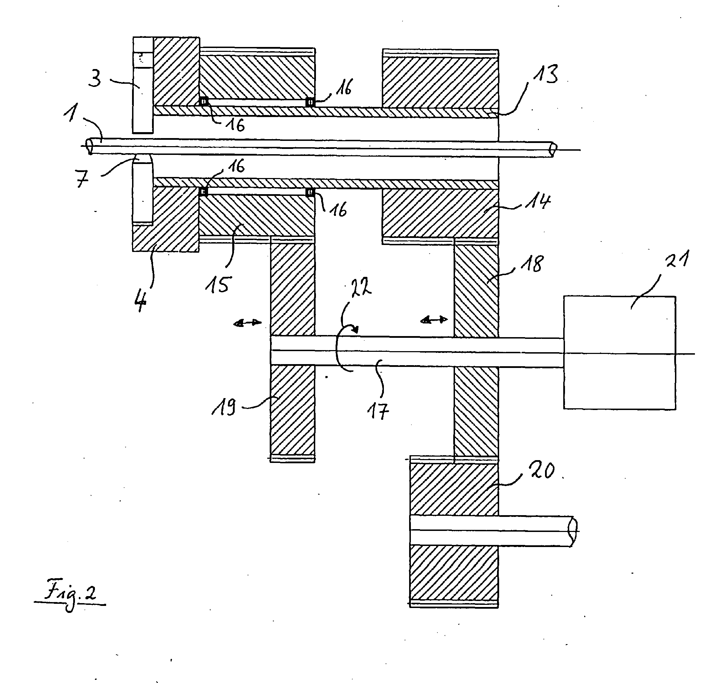

Die Figuren 1 und 2 zeigen Teile einer Schälmaschine zum Schälen der Oberfläche von stangenförmigen Werkstücken 1. Fig. 1 zeigt einen Schälkopf 2 einer solchen Maschine. Der Schälkopf 2 besteht aus einer im Wesentlichen scheibenförmigen Werkzeughalterung 3 sowie einer Zustellhülse 4, von der in Fig. 1 nur ein vorderer, die Werkzeughalterung 3 umschließender Teil zu sehen ist. Die Werkzeughalterung 3 weist mittig eine Durchtrittsöffnung 5 auf, durch die das zu schälende Werkstück 1 (dargestellt in Fig. 2) zur Bearbeitung geführt wird. An der Werkzeughalterung 3 ist ein Werkzeugträger 6 fixiert, der an seinem zur Durchtrittsöffnung 5 weisenden Ende ein Schälmesser 7 aufweist. In Fig. 1 ist der besseren Übersichtlichkeit halber nur ein Werkzeugträger 6 dargestellt. Tatsächlich sind insgesamt 4 Werkzeugträger 6 mit je einem Schälmesser 7 vorgesehen, die auf der Werkzeughalterung 3 in entsprechender Weise in den Halterungsnuten 8 angeordnet werden. Die Werkzeugträger 6 sind an der Werkzeughalterung 3 mittels Führungsleisten 9 fixiert, die eine Verschiebung des Werkzeugträgers 6 in etwa in radialer Richtung erlauben. Zur Vermeidung einer axialen Bewegung der Werkzeugträger 6 weisen die Führungsleisten 9 Absätze 33 auf, die vom Werkzeugträger 6 hintergriffen werden.

Die im Wesentlichen radiale Führbarkeit der Werkzeugträger 6 dient zum einen zur Einstellung des gewünschten Bearbeitungsdurchmessers als auch der Zustellung aufgrund fortschreitender Abnutzung der Schälmesser 7.

Die Zustellhülse 4 weist für jeden Werkzeugträger 6 ein Führungselement 10 auf. Die Führungselemente 10 sind blockförmig mit einer der Werkzeughalterung 3 zugewandten ebenen Führungsfläche 11, von denen in Fig. 1 aufgrund der perspektivischen Darstellung nur zwei zu sehen sind. An den Führungsflächen stützt sich jeweils ein Werkzeugträger 6 mit einem am rückwärtigen Ende des Werkzeugträgers 6 angebrachten austauschbaren Abstützelement 12 ab. Die Führungsflächen 11 verlaufen nicht konzentrisch zur Zustellhülse 4 und damit zur Werkzeughalterung 3 sondern verringern in Fig. 1 in ihrem Verlauf im Uhrzeigersinn den Radius stetig. Wird nun die Werkzeughalterung 3 relativ zur Zustellhülse 4 im Uhrzeigersinn gedreht, wird der Werkzeugträger 6 aufgrund des abnehmenden Radius der Führungsbahn 11 über das Abstützelement 12 im Wesentlichen radial nach innen verschoben. Auf diese Weise kann der gewünschte Radius eingestellt bzw. der Werkzeugträger 6 und damit das Schälmesser 7 zugestellt werden. Über die gesamte Führungsfläche 11 hinweg hat der Werkzeugträger 6 einen gleichbleibenden Kontakt zum Führungselement 10, wodurch bei allen bearbeitbaren Radien das Schälmesser 7 mit gleichmäßiger Kraft auf das Werkstück 1 wirken kann.

Fig. 2 verdeutlicht, auf welche Weise während der Bearbeitung des Werkstückes 1 eine Relativrotation zwischen Werkstückhalterung 3 und Zustellhülse 4 erreicht wird. Fig. 2 zeigt einen schematischen Querschnitt auf das Getriebe zum Antrieb der Zustellhülse 4 und der Werkzeughalterung 3. In Fig. 2 ist die Werkzeughalterung 3 nur schematisch mit einem Schälmesser 7 dargestellt, das auf das Werkstück 1 wirkt. Elemente zur Führung des Werkstückes 1 sind für die bessere Übersichtlichkeit nicht dargestellt. Die Werkzeughalterung 3 ist fest mit einer Hohlwelle 13 verbunden, die einen Werkzeughalterungszahnkranz 14 aufweist. Das Werkstück 1 ist durch die Hohlwelle 13 hindurch geführt. Die Zustellhülse 4 ist fest mit einem Zustellhülsenzahnkranz 15 verbunden und über Kugellager 16 an der Hohlwelle 13 drehbar gelagert. Auf einer gemeinsamen Getriebewelle 17 sind ein Halterungsantriebszahnrad 18 und ein Hülsenantriebszahnrad 19 fixiert, wobei das Halterungsantriebszahnrad 18 in den Werkzeughalterungszahnkranz 14 und das Hülsenantriebszahnrad 19 in den Zustellhülsenzahnkranz 15 eingreift. Das Halterungsantriebszahnrad 18 wird über ein Hauptantriebszahnrad 20 angetrieben, das wiederum von einem hier nicht dargestellten Motor angetrieben ist. Sämtliche hier dargestellten Zahnräder 18 bis 20 und Zahnkränze 14 und 15 weisen eine Schrägverzahnung auf. Beispielhaft weist das Halterungsantriebszahnrad 18 eine rechtssteigende Verzahnung auf. Das Hülsenantriebszahnrad 19 weist eine entgegengesetzt orientierte, d. h. linkssteigende Verzahnung auf. Die mit dem Halterungszahnrad 18 und dem Hülsenantriebszahnrad 19 zusammenwirkenden Zahnkränze 14 und 15 weisen die für den Eingriff passende jeweils entgegengesetzt orientierte Verzahnung auf, ebenso wie das in das Halterungszahnrad 18 eingreifende Hauptantriebszahnrad 20. Die Zahnräder 18 und 19 und die Zahnkränze 14 und 15 sind so aufeinander abgestimmt, dass Werkzeughalterung 3 und Zustellhülse 4 mit derselben Winkelgeschwindigkeit rotieren, solange die Getriebewelle 17 ihre axiale Position nicht verändert.

Wie bereits oben dargestellt, ist für die Zustellung der Schälmesser 7 eine Relativrotation zwischen Zustellhülse 4 und Werkzeughalterung 3 notwendig. Zur Bewirkung einer solchen Relativrotation wird bei laufendem Getriebe die Getriebewelle 17 mittels eines Axialantriebs 21 definiert in axialer Richtung verschoben. Gleichzeitig werden damit Halterungsantriebszahnrad 18 und Hülsenantriebszahnrad 19 verschoben. Damit während der Verschiebung der Eingriff von Halterungsantriebszahnrad 18 und Hülsenantriebszahnrad 19 in Zustellhülsenzahnkranz 15 bzw. Werkzeughalterungszahnkranz 14 und Hauptantriebszahnrad 20 gewährleistet bleibt, sind Werkzeughalterungszahnkranz 14, Zustellhülsenzahnkranz 15 und Hauptantriebszahnrad 20 in ihrer axialen Ausdehnung entsprechend dimensioniert.

Wird die Getriebewelle 17 bei der mit Pfeil 22 dargestellten Drehrichtung in axialer Richtung nach vorne, d. h. bei Aufsicht auf Fig. 2 nach links verschoben, wird aufgrund der Schrägverzahnung der Zustellhülsenzahnkranz 15 etwas langsamer angetrieben als ohne die axiale Bewegung, während der Werkzeughalterungszahnkranz 14 etwas schneller angetrieben wird als zuvor. D. h. während der axialen Verschiebung der Getriebewelle 17 rotiert die Werkzeughalterung 3 im Vergleich zur Zustellhülse 4 mit etwas höherer Winkelgeschwindigkeit, woraus die gewünschte Relativrotation zwischen Werkzeughalterung 3 und Zustellhülse 4 resultiert. Die höhere Winkelgeschwindigkeit der Werkzeughalterung 3 bewirkt, dass die Werkzeughalterung 3 in der Darstellung der Fig. 1 gegenüber der Zustellhülse 4 im Uhrzeigersinn verdreht wird, wodurch der Werkzeugträger 6 aufgrund des Verlaufs der Führungsfläche 11 radial nach innen zugestellt wird.

Mit einer in den Figuren nicht dargestellten Messtechnik wird der Radius des bearbeiteten Werkstücks 1 festgestellt und kann für die Steuerung der Axialposition der Getriebewelle 17 verwendet werden.

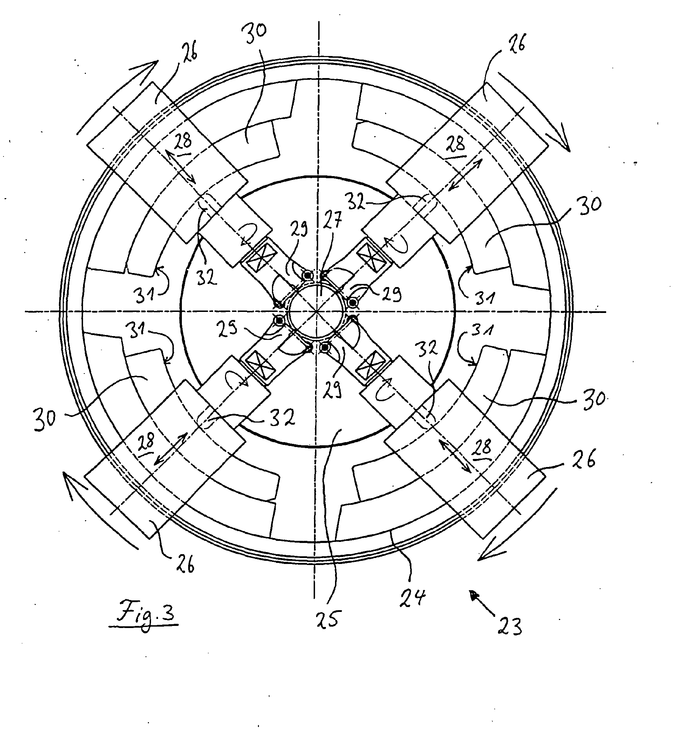

Fig. 3 zeigt beispielhaft einen weiteren Schälkopf 23 mit einer Zustellhülse 24 und einer Werkzeughalterung 25. Als Werkzeuge sind hier vier Fräsen 26 zur Bearbeitung des stangenförmigen Werkstücks 27 vorgesehen. Die Fräsen 26 sind jeweils durch Elektromotoren 28 für die Rotation des Fräsenkopfes 29 angetrieben. Die Zustellhülse 24 weist für jede Fräse 6 ein Führungselement 30 mit einer Führungsfläche 31 auf, an der jeweils ein Abstützelement 32 eines der Fräsen 26 abgestützt ist. Der Schälkopf 23 gemäß Fig. 3 kann genauso in einer Maschine mit dem Getriebe gemäß Fig. 2 eingesetzt werden, wie der Schälkopf 2 gemäß Fig. 1. Durch eine Relativrotation der Werkzeughalterung 25 im Uhrzeigersinn relativ zur Zustellhülse 24 werden die Fräsen 26 in radialer Richtung auf die Drehachse der Werkzeughalterung 25 hin zugestellt, indem die Abstützelemente 32 über die Führungsflächen 31 gleiten, deren Radius zur Drehachse in ihrem Verlauf (bei der Betrachtung in Fig. 3 im Uhrzeigersinn) stetig abnimmt.

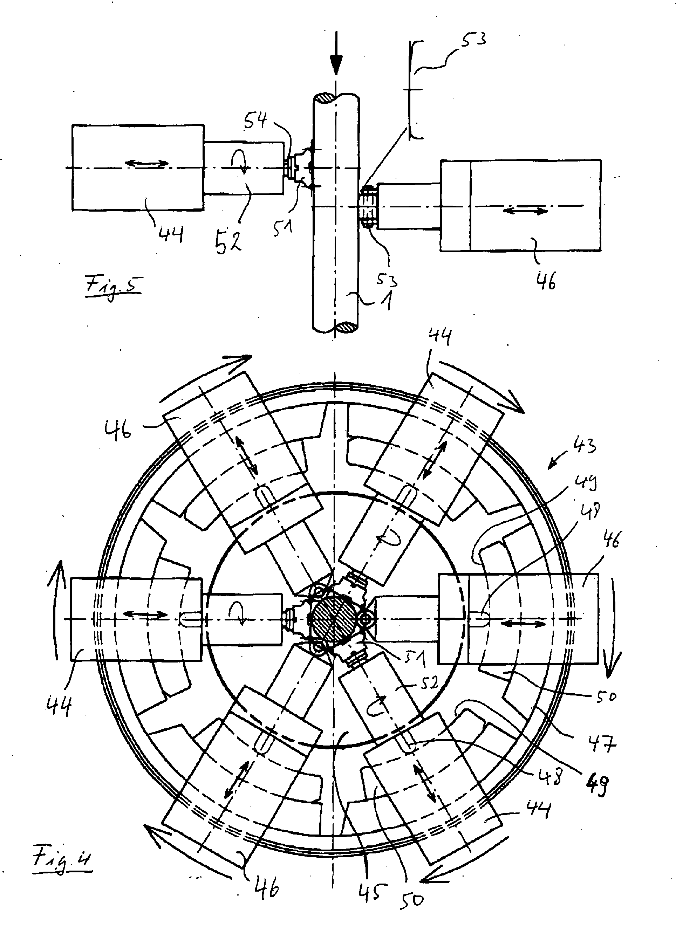

Fig. 4 zeigt einen weiteren Schälkopf 43, der lediglich drei Fräsen 44 aufweist, die an einer Werkzeughalterung 45 in hier nicht dargestellter Weise fixiert sind. Zusätzlich sind drei, ebenfalls an der Werkzeughalterung 45 fixierte Polierwerkzeuge 46 vorgesehen.

Fig. 5 zeigt das zu bearbeitende Werkstück 1 mit einem der Fräsen 44 und einem der Polierwerkzeuge 46 in seitlicher Ansicht. Der oberhalb des Werkstückes 1 angebrachte Pfeil zeigt die Vortriebsrichtung des Werkstückes 1 für die Bearbeitung. Jeweils eine Fräse 44 und ein Polierwerkzeug 46 sind einander diametral gegenüberliegend angeordnet, so dass die durch die Fräse 44 sowie durch das Polierwerkzeug 46 auf das Werkstück 1 ausgeübten radialen Kräfte zueinander entgegengesetzt gerichtet sind. Die Fräsewerkzeuge 44 sind mit ihren Längsachsen in einer gemeinsamen Ebene senkrecht zur Vortriebsrichtung des Werkstückes 1 angeordnet, entsprechend die Polierwerkzeuge 46. Die Polierwerkzeuge 46 weisen an ihrem vorderen Ende eine Polierrolle 53 auf, die - wie in der vergrößerten Ausschnittszeichnung in der Fig. 5 oben rechts dargestellt - über eine gewisse Länge press am Werkstück 1 anliegt. Durch die in einer Ebene angeordneten Polierwerkzeuge 46 ist neben der Polierwirkung gleichzeitig im Zusammenspiel mit den Fräsen 44 eine Zentrierwirkung gegeben. Sowohl die Fräsen 44 als auch die Polierwerkzeuge 46 werden wie die Fräsen 26 im Beispiel der Fig. 3 mittels einer Zustellhülse 47 auf das Werkstück 1 hin zugestellt, indem die Zustellhülse 47 relativ zur Werkzeughalterung 45 um eine zum Werkstück konzentrische Achse gedreht wird. Sowohl die Fräsen 44 als auch die Polierwerkzeuge 46 stützen sich in radialer Richtung mittels Abstützelementen 48 an Führungsflächen 49 jeweils eines Führungselements 50 ab. Aufgrund des im Uhrzeigersinn abnehmenden Radius der Führungsfläche 49 wird bei einer Rotation der Werkzeughalterung 45 im Uhrzeigersinn relativ zur Zustellhülse 47 die jeweilige Fräse 44 oder das jeweilige Polierwerkzeug 46 in axialer Richtung auf das Werkstück hin zugestellt. Zur Bearbeitung des Werkstückes 1 dreht sich der gesamte Schälkopf 43 z. B. im Uhrzeigersinn. Der Vortrieb des Werkstückes 1 und die Rotationsgeschwindigkeit des Schälkopfes 43 sind dabei so aufeinander abgestimmt, dass die Fräsenköpfe 51 den gesamten Werkstückumfang bearbeiten. Die Fräsenköpfe 51 drehen sich dabei um ihre Längsachse. Das relativ zur Werkzeughalterung 45 feststehende Hüllstück 52 umgibt die den Fräskopf 51 antreibende Fräsenwelle 54.

### Bezugszeichenliste

- 1: Werkstück
- 2: Schälkopf
- 3: Werkzeughalterung
- 4: Zustellhülse
- 5: Durchtrittsöffnung
- 6: Werkzeugträger
- 7: Schälmesser
- 8: Halterungsnut
- 9: Führungsleiste
- 10: Führungselement
- 11: Führungsfläche
- 12: Abstützelement
- 13: Hohlwelle
- 14: Werkzeughalterungszahnkranz
- 15: Zustellhülsenzahnkranz
- 16: Kugellager
- 17: Getriebewelle
- 18: Halterungsantriebszahnrad
- 19: Hülsenantriebszahnrad
- 20: Hauptantriebszahnrad
- 21: Axialantrieb
- 22: Laufrichtung
- 23: Schälkopf
- 24: Zustellhülse
- 25: Werkzeughalterung
- 26: Fräse
- 27: Werkstück
- 28: Elektromotor
- 29: Fräsenkopf
- 30: Führungselement

- 31: Führungsfläche
- 32: Abstützelement
- 33: Absatz
- 43: Schälkopf
- 44: Fräsen
- 45: Werkzeughalterung
- 46: Polierwerkzeug
- 47: Zustellhülse
- 48: Abstützelement
- 49: Führungsfläche
- 50: Führungselemente
- 51: Fräsenkopf
- 52: Hüllstück
- 53: Polierrolle
- 54: Fräsenwelle

## Patentansprüche

1. Vorrichtung zur spanabhebenden Bearbeitung stangen- oder rohrförmiger Werkstücke (1, 27), umfassend
a) eine mit einem Durchlass (5) für das zu bearbeitende Werkstück (1,27) versehene und um die Längsachse des zu bearbeitenden Werkstücks (1, 27) drehbar gelagerte und angetriebene Werkzeughalterung (3, 25) mit mehreren im Wesentlichen in radialer Richtung zustellbaren Werkzeugen (7, 26),
b) eine konzentrisch zur Werkzeughalterung (3, 25) drehbar gelagerte und angetriebene Zustellhülse (4, 24),
c) Relativbewegungsmittel zur Erzeugung einer Relativbewegung zwischen Werkzeughalterung (3, 25) und Zustellhülse (4, 24),
d) Zustellmittel zur Umsetzung der Relativbewegung zwischen Werkzeughalterung (3, 25) und Zustellhülse (4, 24) in eine Zustellbewegung der Werkzeuge (7, 26), wobei
e) die Relativbewegung zwischen Werkzeughalterung (3, 25) und Zustellhülse (4, 24) eine zur Drehachse der Werkzeughalterung (3, 25) konzentrische Relativrotation ist,
**dadurch gekennzeichnet, dass**
f) die Relativbewegungsmittel ein Getriebe mit folgenden Merkmalen umfassen:
aa) ein in einen Zahnkranz (15) der Zustellhülse (4, 24) eingreifendes an einer Getriebewelle (17) angeordnetes Hülsenantriebszahnrad (19) mit einer ersten Schrägverzahnung,
bb) ein in einen Zahnkranz (14) der Werkzeughalterung (3, 25) eingreifendes an derselben Getriebewelle (17) angeordnetes Halterungsantriebszahnrad (18) mit einer zur ersten Schrägverzahnung entgegengesetzt orientierten zweiten Schrägverzahnung, und
cc) Mittel (21) zur kontrollierten axialen Verschiebung der Getriebewelle (17) relativ zur Zustellhülse (4, 24) und/oder zur Werkzeughalterung (3, 25).

2. Vorrichtung nach Anspruch 1, **dadurch gekennzeichnet, dass**
a) die Zustellmittel für jedes Werkzeug (7, 26) eine an der Zustellhülse (4, 24) vorgesehene Werkzeugführung (11,31) umfassen, wobei jede Werkzeugführung (11, 31) mit sich verringerndem Abstand zur Zustellhülsendrehachse in Umfangsrichtung verlaufend angeordnet ist, und
b) jedes Werkzeug (7, 26) unmittelbar oder über einen Werkzeugträger (6) an der zugehörigen Werkzeugführung (11, 31) anliegt.

3. Vorrichtung nach Anspruch 1 bis 2, **dadurch gekennzeichnet, dass** das Halterungsantricbszahnrad (18) oder das Hülsenantriebszahnrad (19) von einem Hauptantriebszahnrad (20) angetrieben ist.

4. Vorrichtung nach einem der Ansprüche 1 bis 3, **dadurch gekennzeichnet, dass** die Werkzeuge Schneidmesser (7) sind.

5. Vorrichtung nach einem der Ansprüche 1 bis 3, **dadurch gekennzeichnet, dass** die Werkzeuge Fräsen (26) sind.

6. Vorrichtung nach einem der vorhergehenden Ansprüche, **dadurch gekennzeichnet, dass** die Werkzeuge sowohl einen Satz spanabhebender Werkzeuge (7,26,44) als auch einen Satz nicht spanabhebender Werkzeuge (46) umfasst.

7. Vorrichtung nach Anspruch 6, **dadurch gekennzeichnet, dass** die spanabhebenden Werkzeuge (7,26,44) und die nicht spanabhebenden Werkzeuge (46) in Vortriebsrichtung des zu bearbeitenden Materials (1,27) gesehen derart hintereinander angeordnet sind, dass das zu bearbeitende Material (1,27) zunächst von den spanabhebenden Werkzeugen (7,26,44) und anschließend von den nicht spanabhebenden Werkzeugen (46) bearbeitet wird.

8. Vorrichtung nach Anspruch 6 oder 7, **dadurch gekennzeichnet, dass** die nicht spanabhebenden Werkzeuge Polierwerkzeuge (46) sind.

9. Vorrichtung nach Anspruch 8, **dadurch gekennzeichnet, dass** die Polierwerkzeuge (46) Polierrollen (53) aufweisen.

10. Vorrichtung nach einem der Ansprüche 6 bis 9, **dadurch gekennzeichnet, dass** die nicht spanabhebenden Werkzeuge (46) gleichzeitig als Zentrierung für das zu bearbeitende Material (1,27) dienen.

## Claims

1. A device for cutting bar-shaped or tubular workpieces (1, 27), comprising
a) a driven toolholder (3, 25) which is provided with a passage (5) for the workpiece (1, 27) to be machined and is mounted rotatably about the longitudinal axis of the workpiece (1, 27) to be machined, with a plurality of tools (7, 26) advanceable essentially in the radial direction,
b) a driven advancing sleeve (4, 24) rotatably mounted concentrically to the toolholder (3, 25),
c) relative movement means for generating a relative movement between the toolholder (3, 25) and advancing sleeve (4, 24),
d) advancing means for converting the relative movement between the toolholder (3, 25) and advancing sleeve (4, 24) into an advancing movement of the tools (7, 26), wherein
e) the relative movement between the toolholder (3, 25) and advancing sleeve (4, 24) is a relative rotation concentric to the axis of rotation of the toolholder (3, 25),
**characterized in that**
f) the relative movement means comprise a gear having the following features:
aa) a sleeve driving gearwheel (19) engaging into a toothed rim (15) of the advancing sleeve (4, 24) and arranged on a gear shaft (17), with a first helical toothing,
bb) a holder driving gearwheel (18) engaging into a toothed rim (14) of the toolholder (3, 25) and arranged on the same gear shaft (17), with a second helical toothing oriented opposite to the first helical toothing, and
cc) means (21) for the controlled axial displacement of the gear shaft (17) in relation to the advancing sleeve (4, 24) and/or to the toolholder (3, 25).

2. The device as claimed in claim 1, **characterized in that**
a) the advancing means for each tool (7, 26) comprise a tool guide (11, 31) provided on the advancing sleeve (4, 24), each tool guide (11, 31) being arranged to run in the circumferential direction at a decreasing distance from the advancing sleeve axis of rotation, and
b) each tool (7, 26) bears directly or via a tool carrier (6) against the associated tool guide (11, 31).

3. The device as claimed in claim 1 or 2, **characterized in that** the holder driving gearwheel (18) or the sleeve driving gearwheel (19) is driven by a main driving gearwheel (20).

4. The device as claimed in one of claims 1 to 3, **characterized in that** the tools are cutting knives (7).

5. The device as claimed in one of claims 1 to 3, **characterized in that** the tools are milling cutters (26).

6. The device as claimed in one of the preceding claims, **characterized in that** the tools comprise both a set of cutting tools (7, 26, 44) and a set of non-cutting tools (46).

7. The device as claimed in claim 6, **characterized in that** the cutting tools (7, 26, 44) and the non-cutting tools (46) are arranged one behind the other, as seen in the direction of propulsion of the material (1, 27) to be machined, in such a way that the material (1, 27) to be machined is machined first by the cutting tools (7, 26, 44) and subsequently by the non-cutting tools (46).

8. The device as claimed in claim 6 or 7, **characterized in that** the non-cutting tools are polishing tools (46).

9. The device as claimed in claim 8, **characterized in that** the polishing tools (46) have polishing rollers (53).

10. The device as claimed in one of claims 6 to 9, **characterized in that** the non-cutting tools (46) serve at the same time as centering for the material (1, 27) to be machined.

## Revendications

1. Dispositif pour usiner par enlèvement de copeaux des pièces en forme de barre ou de tuyau (1, 27), comprenant
a) un porte-outil (3, 25) pourvu d'un passage (5) pour la pièce à usiner (1, 27) et entraîné et monté à rotation autour de l'axe longitudinal de la pièce à usiner (1, 27), avec plusieurs outils (7, 26) pouvant être avancés essentiellement dans la direction radiale,
b) une douille d'avance (4, 24) entraînée et montée à rotation de manière concentrique au porte-outil (3, 25),
c) des moyens de déplacement relatif pour produire un déplacement relatif entre le porte-outil (3, 25) et la douille d'avance (4, 24),
d) des moyens d'avance pour convertir le déplacement relatif entre le porte-outil (3, 25) et la douille d'avance (4, 24) en un déplacement d'avance des outils (7, 26),
e) le déplacement relatif entre le porte-outil (3, 25) et la douille d'avance (4, 24) étant une rotation relative concentrique à l'axe de rotation du porte-outil (3, 25),
**caractérisé en ce que**
f) les moyens de déplacement relatif comprenant une transmission ayant les caractéristiques suivantes :
aa) une roue dentée d'entraînement de douille (19) disposée sur un arbre de transmission (17) et venant en prise dans une couronne dentée (15) de la douille d'avance (4, 24), avec une première denture hélicoïdale,
bb) une roue dentée d'entraînement de fixation (18) disposée sur le même arbre de transmission (17) et venant en prise dans une couronne dentée (14) du porte-outil (3, 25), avec une deuxième denture hélicoïdale orientée à l'opposé de la première denture hélicoïdale, et
cc) des moyens (21) pour le déplacement axial contrôlé de l'arbre de transmission (17) par rapport à la douille d'avance (4, 24) et/ou au porte-outil (3, 25).

2. Dispositif selon la revendication 1, **caractérisé en ce que**
a) les moyens d'avance pour chaque outil (7, 26) comprennent un guide d'outil (11, 31) prévu sur la douille d'avance (4, 24), chaque guide d'outil (11, 31) étant disposé s'étendant dans la direction périphérique avec une distance diminuant vers l'axe de rotation de la douille d'avance, et
b) chaque outil (7, 26) s'applique directement ou par le biais d'un support d'outil (6) sur le guide d'outil associé (11, 31).

3. Dispositif selon la revendication 1 ou 2, **caractérisé en ce que** la roue dentée d'entraînement de fixation (18) ou la roue dentée d'entraînement de douille (19) est entraînée par une roue dentée d'entraînement principale (20).

4. Dispositif selon l'une quelconque des revendications 1 à 3, **caractérisé en ce que** les outils sont des lames de coupe (7).

5. Dispositif selon l'une quelconque des revendications 1 à 3, **caractérisé en ce que** les outils sont des fraises (26).

6. Dispositif selon l'une quelconque des revendications précédentes, **caractérisé en ce que** les outils comprennent à la fois un jeu d'outils d'enlèvement de copeaux (7, 26, 44) et un jeu d'outils sans enlèvement de copeaux (46).

7. Dispositif selon la revendication 6, **caractérisé en ce que** les outils d'enlèvement de copeaux (7, 26, 44) et les outils sans enlèvement de copeaux (46) sont disposés les uns derrière les autres, vu dans la direction d'avance du matériau à usiner (1, 27), de telle sorte que le matériau à usiner (1, 27) soit d'abord usiné par les outils d'enlèvement de copeaux (7, 26, 44) puis par les outils sans enlèvement de copeaux (46).

8. Dispositif selon la revendication 6 ou 7, **caractérisé en ce que** les outils sans enlèvement de copeaux sont des outils de polissage (46).

9. Dispositif selon la revendication 8, **caractérisé en ce que** les outils de polissage (46) présentent des rouleaux de polissage (53).

10. Dispositif selon l'une quelconque des revendications 6 à 9, **caractérisé en ce que** les outils sans enlèvement de copeaux (46) servent en même temps de centrage pour le matériau à usiner (1, 27).
